# EUROPÄISCHE PATENTSCHRIFT

(11) **EP 0 541 069 B1**
(45) Veröffentlichungstag und Bekanntmachung des Hinweises auf die Patenterteilung: **25.01.1995**
(21) Anmeldenummer: 92118902.3
(22) Anmeldetag: 04.11.1992
(51) Int. Cl.: F16B 21/07

(54) **Verbindung zwischen einem Träger und einem Plattenelement**
Joint between a support and a panel
Joint entre un support et un panneau

(30) Priorität: 05.11.1991 DE 4136422
(43) Veröffentlichungstag der Anmeldung: 12.05.1993
(73) Patentinhaber: TRW United-Carr GmbH & Co. KG, D-67677 Enkenbach-Alsenborn (DE)
(72) Erfinder: Kraus, Willibald, W-6719 Grünstadt (DE)
(74) Vertreter: Schieschke, Klaus, Dipl.-Ing.

(56) Entgegenhaltungen:
- DE-A- 2 744 294
- DE-C- 4 014 589
- US-A- 3 362 280
- US-A- 3 712 655
- US-A- 4 990 044

## Beschreibung

Die Erfindung bezieht sich auf eine Verbindung zwischen einem Träger, insbesondere einem Karosserieteil eines Kraftfahrzeuges, und einem Plattenelement, insbesondere einer Wandverkleidung, mit einem in eine Öffnung des Trägers einsetzbaren, mit einem Kopfteil versehenen, aus Kunststoff bestehenden Halteelement, wobei zwischen einem am Plattenelement befestigbaren Oberteil und dem Halteelement ein Mittelteil angeordnet ist, dessen zum Oberteil weisender, oberer Bereich einen Kugelabschnitt aufweist, welcher in eine mit einem Gegenprofil versehene Öffnung eines rohrförmigen Abschnitts des Oberteils einclipbar ist und wobei sich innerhalb der Öffnung des rohrförmigen Abschnitts Rippen befinden, welche längs der Öffnung verlaufen (DE-C-4 014 589).

Aufgabe der vorliegenden Erfindung ist es nun, die Verbindung zwischen dem Oberteil und dem Kugelabschnitt des Mittelteils so zu verbessern, daß einerseits eine leichte Montage gewährleistet ist, andererseits jedoch hohe Abzugskräfte aufgebracht werden müssen, um die Verbindung zu lösen.

Diese Aufgabe wird durch die kennzeichnenden Merkmale des Anspruchs 1 gelöst. Hierdurch ergibt sich der Vorteil, daß infolge des Zusammenwirkens der Federelemente und der Distanzelemente unter Gewährleistung hoher Abzugskräfte der Kugelabschnitt des Mittelteils funktionssicher in dem rohrförmigen Abschnitt des Oberteils eingelagert ist, wobei andererseits die Montage leicht und schnell durchführbar ist. Die Federelemente können hierbei jeweils aus einem federnden Bereich und einem daran angrenzenden L-Bereich bestehen, wobei der letztgenannte Bereich zur Einlagerung des Kugelabschnitts dient.

In weiterer Ausgestaltung der Erfindung kann der federnde Bereich als Teil eines konischen Mantels ausgebildet sein, dessen größter Durchmesserbereich mit der Öffnung des rohrförmigen Abschnitts verbunden ist. Hierdurch ergibt sich auf einfache Weise ein sehr effektives Federelement, welches im oberen Bereich mit seinem L-Abschnitt den Kugelabschnitt des Mittelteils haltert.

Die Länge einander gegenüberliegender, als Stege aüsgebildeter Distanzelemente ist auf den Außendurchmesser des Kugelabschnitts abgestellt. Weiterhin ersteckt sich die Steghöhe mindestens bis zu dem Bereich des Kugelabschnitts, sie kann sich jedoch auch über den gesamten rohrförmigen Abschnitt erstrecken. Damit wird der Kugelabschnitt funktionssicher in dem Oberteil gehaltert, so daß auch bei seitlicher Einwirkung auf das Mittelteil sich der Kugelabschnitt innerhalb des Oberteils nicht verschieben kann, sondern trotz der Federelemente eine gute Zentrierung durch die Stege erfährt.

In weiterer Ausgestaltung der Erfindung können vier Federelemente mit dazwischen angeordneten Distanzelementen Anwendung finden. Weiterhin können die Stege im unteren Bereich, auf den Außenumfang des konischen Mantels abgestellt, abgeschrägt ausgebildet sein.

Zur Erleichterung der Montage kann am Außenumfang des rohrförmigen Abschnitts ein Arretierungsnocken angeordnet sein, wodurch eine automatische Zuführung beim Sortieren bewirkt wird. Damit ist vorteilhafterweise eine falsche Positionierung gegenüber dem Träger beim Zusammenbau ausgeschlossen.

Die Erfindung wird nachfolgend anhand eines in der Zeichnung dargestellten Ausführungsbeispiels näher beschrieben. In der Zeichnung zeigen:
- Fig. 1: eine Seitenansicht des Oberteils;
- Fig. 2: eine Draufsicht auf das Oberteil nach Fig. 1;
- Fig. 3: eine Seitenansicht des Oberteils, teils geschnitten und gebrochen im zusammengebauten Zustand mit dem Kugelabschnitt des Mittelteils, ebenfalls gebrochen;
- Fig. 4: eine perspektivische Schnittansicht des rohrförmigen Abschnitts des Oberteils.

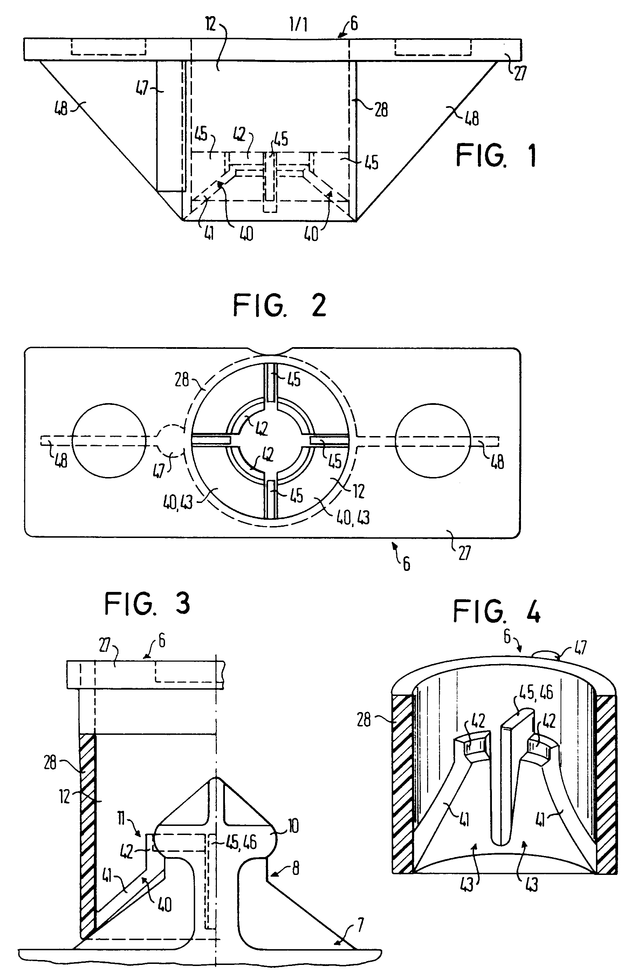

Nach Fig. 1 besteht ein an einem nicht näher dargestellten Plattenelement befestigbares Oberteil 6 aus einer Platte 27, an welcher ein rohrförmiger Abschnitt 28 befestigt ist. Zwischen dem rohrförmigen Abschnitt 28 und der Platte 27 sind Verstärkungsstege 48 vorgesehen. Am Außenumfang des rohrförmigen Abschnitts befindet sich ein Arretierungsnocken 47, welcher dazu dient, bei der automatischen Zuführung beim Sortieren das Oberteil 6 positionsgerecht zum nicht näher dargestellten Träger in die richtige Lage zu bringen.

Am Innenumfang des rohrförmigen Abschnitts 28 ist ein Gegenprofil 11 vorgesehen, welches aus mehreren, über den Umfang der Öffnung 12 des rohrförmigen Abschnitts 28 verteilten Federelementen 40 besteht. Zwischen diesen Federelementen 40 befinden sich nach Fig. 4 Distanzelemente 45, welche als Stege 46 ausgebildet sind.

Die Federelemente 40 bestehen jeweils aus einem federnden Bereich 41 und einem daran angrenzenden L-Bereich 42. Aus Fig. 3 ist ersichtlich, daß dieser L-Bereich 42 einen Kugelabschnitt 10 im oberen Bereich 8 eines Mittelteils 7 beaufschlagt und mit seinem unteren Abschnitt hintergreift. Hierbei ist der federnde Bereich 41 als Teil eines konischen Mantels 43 ausgebildet, dessen größter Durchmesserbereich mit der Öffnung 12 des rohrförmigen Abschnitts 28 in der Einschubzone verbunden ist.

Damit läßt sich der Kugelabschnitt 10 des oberen Bereichs 8 des Mittelteils 7 von unten in die Öffnung 12 des rohrförmigen Abschnitts 28 des Oberteils 6 einschieben, wobei die Federelemente 41 zurückfedern und erst dann in ihre Ausgangsposition zurückkehren, wenn der Kugelabschnitt 10 in dem L-Bereich der Federelemente 40 eingelagert ist. In dieser Position beaufschlagen außerdem die Stirnseiten der Stege 46 den Kugelabschnitt 10 an seinem Außenumfang, so daß in der montierten Position der Kugelabschnitt funktionssicher in dem Oberteil 6 eingelagert ist. Sollte auf das Mittelteil 7 eine seitliche Verschiebekraft einwirken, so wird diese Kraft von den Stegen 46 aufgefangen, so daß die Federelemente 40 keine Beeinträchtigung erfahren.

Aus Fig. 1 und 2 ist ersichtlich, daß vier Federelemente 40 mit dazwischen angeordneten Distanzelementen 45 in dem rohrförmigen Abschnitt 28 angeordnet sein können. Hierbei ist nach Fig. 4 jeweils zwischen zwei Federelementen 40 ein Distanzelement 45 in Form des Steges 46 angeordnet. Die Steglänge jedes dieser Stege 46 ist auf den Außendurchmesser des Kugelabschnitts 10 abgestellt und verläuft radial vom Innenumfang des rohrförmigen Abschnitts 28. Die Steghöhe muß sich mindestens bis zum Bereich des Kugelabschnitts 10 (nach Fig. 3) erstrecken. Erforderlichenfalls kann sie nach oben auch den gesamten rohrförmigen Abschnitt 28 durchsetzen.

Weiterhin besteht die Möglichkeit, daß die Stege im unteren Bereich, auf den Außenumfang des konischen Mantels abgestellt, abgeschrägt sind, so daß sie mit den unterhalb des Kugelabschnitts 10 liegenden Außenkonturen des Mittelteils 7 nicht kollidieren können.

Durch die spezielle Gestaltung der Federelemente und der Stege wird zwischen dem Oberteil 6 und dem Mittelteil 7 eine hohe Abzugskraft erzielt, wobei andererseits jedoch eine leichte und schnelle Montage durchführbar ist.

## Patentansprüche

1. Verbindung zwischen einem Träger, insbesondere einem Karosserieteil eines Kraftfahrzeuges, und einem Plattenelement, insbesondere einer Wandverkleidung, mit einem in eine Öffnung des Trägers einsetzbaren, mit einem Kopfteil versehenen, aus Kunststoff bestehenden Halteelement, wobei zwischen einem am Plattenelement befestigbaren Oberteil (6) und dem Halteelement ein Mittelteil (7) angeordnet ist, dessen zum Oberteil (6) weisender, oberer Bereich (8) einen Kugelabschnitt (10) aufweist, welcher in eine mit einem Gegenprofil (11) versehene Öffnung (12) eines rohrförmigen Abschnitts (28) des Oberteils einclipbar ist und wobei sich innerhalb der Öffnung des rohrförmigen Abschnitts Rippen befinden, welche längs der Öffnung verlaufen, dadurch gekennzeichnet, daß das Gegenprofil (11) mehrere, über den Umfang der Öffnung (12) verteilte, den Kugelabschnitt (10) hinter = greifende Federelemente (40) aufweist und daß die Rippen als zwischen den Federelementen (40) angeordnete und den Kugelabschnitt (10) zumindest teilweise beaufschlagende Distanzelemente elemente (45) ausgebildet sind.

2. Verbindung nach Anspruch 1, dadurch gekennzeichnet, daß die Federelemente (40) jeweils aus einem federnden Bereich (41) und einem daran angrenzenden L-Bereich (42) zur Einlagerung des Kugelabschnitts (10) bestehen.

3. Verbindung nach Anspruch 2, dadurch gekennzeichnet, daß der federnde Bereich (41) als Teil eines konischen Mantels (43) ausgebildet ist, dessen größter Durchmesserbereich mit der Öffnung (12) des rohrförmigen Abschnitts (28) verbunden ist.

4. Verbindung nach Anspruch 3, dadurch gekennzeichnet, daß die Länge einander gegenüberliegender, als Stege (46) ausgebildeter Distanzelemente (45) auf den Außendurchmesser des Kugelabschnitts (10) abgestellt ist.

5. Verbindung nach Anspruch 4, dadurch gekennzeichnet, daß sich die Steghöhe einander gegenüberliegender Stege (46) mindestens bis zu dem Bereich des Kugelabschnitts (10) erstreckt.

6. Verbindung nach Anspruch 4 oder 5, dadurch gekennzeichnet, daß die Stege (46) im unteren Bereich, auf den Außenumfang des konischen Mantels (43) abgestellt, abgeschrägt sind.

7. Verbindung nach einem der vorhergehenden Ansprüche, gekennzeichnet durch vier Federelemente (40) mit dazwischen angeordneten Distanzelementen (45).

8. Verbindung nach einem der vorhergehenden Ansprüche, dadurch gekennzeichnet, daß am Außenumfang des rohrförmigen Abschnittes (28) ein Arretierungsnocken (47) angeordnet ist.

## Claims

1. Connection between a support, in particular a body part of a motor vehicle, and a panel element, in particular a wall panel, with a holding element which can be inserted into an opening in the support, is provided with a head part and is made of plastic, there being arranged between a top part (6), which can be fastened to the panel element, and the holding element a central part (7), the upper region (8) of which, which points towards the top part (6), has a spherical portion (10) which can be clipped into an opening (12), provided with a counter profile (11), in a tubular portion (28) of the top part, and there being situated within the opening in the tubular portion ribs which run along the opening, characterized in that the counter profile (11) has a plurality of spring elements (40) which are distributed over the circumference of the opening (12) and reach behind the spherical portion (10), and in that the ribs are designed as spacer elements (45) which are arranged between the spring elements (40) and impinge at least on part of the spherical portion (10).

2. Connection according to Claim 1, characterized in that the spring elements (40) each comprise a resilient region (41) and an L-region (42) which is adjacent thereto and is intended for insertion of the spherical portion (10).

3. Connection according to Claim 2, characterized in that the resilient region (41) is designed as part of a conical casing (43) whose region of largest diameter is connected to the opening (12) in the tubular portion (28).

4. Connection according to Claim 3, characterized in that the length of spacer elements (45), which lie opposite one another and are designed as cross-pieces (46), is tailored to the outer diameter of the spherical portion (10).

5. Connection according to Claim 4, characterized in that the cross-piece height of cross-pieces (46) lying opposite one another extends at least to the region of the spherical portion (10).

6. Connection according to Claim 4 or 5, characterized in that the cross-pieces (46) are bevelled in the lower region, tailored to the outer circumference of the conical casing (43).

7. Connection according to one of the preceding claims, characterized by four spring elements (40) with spacer elements (45) arranged in between.

8. Connection according to one of the preceding claims, characterized in that a locking cam (47) is arranged on the outer circumference of the tubular portion (28).

## Revendications

1. Joint entre un support, notamment une partie de la carrosserie d'un véhicule automobile, et un panneau, notamment un habillage de paroi, présentant un élément de retenue consistant en une matière plastique, muni d'une partie frontale et pouvant être inséré dans une ouverture du support, joint dans lequel est interposée, entre l'élément de retenue et une partie supérieure (6) pouvant être fixée au panneau, une partie centrale (7) dont la région supérieure (8), orientée vers la partie supérieure (6), comporte une zone sphérique (10) qui peut être enclipsée dans un orifice (12) d'une zone tubulaire (28) de la partie supérieure, pourvu d'un profil complémentaire (11) ; et dans lequel des nervures, situées à l'intérieur de l'orifice de la zone tubulaire, s'étendent le long dudit orifice, caractérisé par le fait que le profil complémentaire (11) comprend plusieurs éléments élastiques (40) répartis sur le pourtour de l'orifice (12) et emprisonnant par-derrière la zone sphérique (10) ; et par le fait que les nervures sont réalisées sous la forme d'éléments d'espacement (45) intercalés entre les éléments élastiques (40) et sollicitant, au moins partiellement, ladite zone sphérique (10).

2. Joint selon la revendication 1, caractérisé par le fait que les éléments élastiques (40) se composent respectivement d'une région élastique (41) et d'une région attenante (42) configurée en L, en vue de l'intégration de la zone sphérique (10).

3. Joint selon la revendication 2, caractérisé par le fait que la région élastique (41) est réalisée sous la forme d'une partie d'une enveloppe conique (43), dont la région de diamètre maximal est reliée à l'orifice (12) de la zone tubulaire (28).

4. Joint selon la revendication 3, caractérisé par le fait que la longueur d'éléments d'espacement (45) mutuellement opposés, réalisés sous la forme de membrures (46), est adaptée au diamètre extérieur de la zone sphérique (10).

5. Joint selon la revendication 4, caractérisé par le fait que la hauteur de membrures (46) mutuellement opposées s'étend au moins jusque dans la région de la zone sphérique (10).

6. Joint selon la revendication 4 ou 5, caractérisé par le fait que les membrures (46) sont biseautées dans la région inférieure, avec adaptation au pourtour extérieur de l'enveloppe conique (43).

7. Joint selon l'une des revendications précédentes, caractérisé par quatre éléments élastiques (40), entre lesquels sont interposés des éléments d'espacement (45).

8. Joint selon l'une des revendications précédentes, caractérisé par le fait qu'une protubérance d'arrêt (47) est disposée sur le pourtour extérieur de la zone tubulaire (28).
